# EUROPEAN PATENT SPECIFICATION

(11) **EP 2 636 473 B1**
(45) Date of publication and mention of the grant of the patent: **09.05.2018**
(21) Application number: 13158385.8
(22) Date of filing: 08.03.2013
(51) Int. Cl.: B23B 29/24

(54) **Tool mounting structure of turret head**
Werkzeugmontagestruktur eines Revolverkopfs
Structure de montage d'outil de tête de tourelle

(30) Priority: 09.03.2012 JP 2012053157
(43) Date of publication of application: 11.09.2013
(73) Proprietor: NAKAMURA-TOME PRECISION INDUSTRY CO., LTD., Hakusan-shi Ishikawa (JP)
(72) Inventor: Koizumi, Akira, Hakusan-shi, Ishikawa (JP)
(74) Representative: Isarpatent

(56) References cited:
- EP-A2- 1 992 434
- DE-A1- 1 952 050
- DE-B1- 2 436 220
- DE-C- 128 189
- GB-A- 2 026 365
- JP-A- H07 227 704
- JP-U- S5 417 990
- US-A- 4 006 518
- US-A- 6 128 812
- US-A1- 2006 104 728
- US-B1- 6 298 531

## Description

### BACKGROUND OF THE INVENTION

### Field of the Invention

The present invention relates to a lathe turning machine according to the preamble of claim 1. Such a turret is disclosed for example by JP S54 17990 U.

### Description of the Conventional Art

There has been proposed a combined lathe turning machine which can mount rotary tools such as drills or milling cutters cutter by embedding a tool drive shaft in a turret head, and can carry out a hole forming process, a grooving process and a flat surface forming process in various positions and directions of a work in addition to a turning process, by setting the turret head so as to be movable in a direction of Y axis and be capable of turning around the Y axis (the direction of B axis). The Y axis in the lathe turning machine is a direction which is orthogonal to a Z axis and an X axis, and the Z axis is a direction of a main shaft, and the X axis is a cutting direction of the tool heading for an axis of the main shaft.

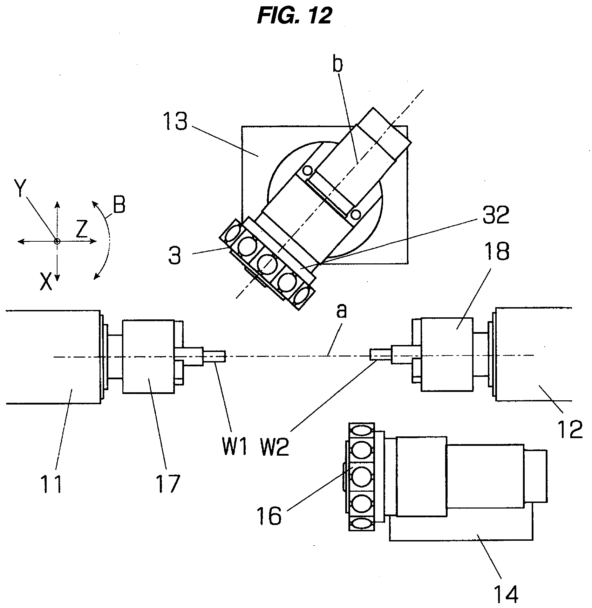

Fig. 12 is a view showing an example of an arrangement of the main shaft and tool posts of the combined lathe turning machine. The example corresponds to an example of a combined lathe turning machine in which two main shafts are opposed and turret tool posts 13 and 14 are arranged above and below an axis a of the main shaft. In the illustrated example, a main shaft pedestal 11 in a left side is fixed to a bed (not shown) so as to be provided at a fixed position, and a main shaft pedestal 12 in a right side is provided so as to be movable in the direction of Z axis. The two main shafts (a left main shaft and a right main shaft) having the same main shaft axis a are individually pivotally supported to the main shaft pedestal 11 and 12. The tool post 13 arranged above the main shaft axis a is movable in the directions of Z axis, X axis and Y axis, and a turret head 3 is mounted to the tool post so as to be capable of turning in the direction of B axis. The tool post 14 arranged below the main shaft axis a is movable only in the directions of Z axis and X axis, and a turret head 16 is mounted to the tool post.

The upper and lower tool posts 13 and 14 have a long moving stroke in the direction of Z axis, and can process both a work (a left work) W1 which is gripped by a chuck 17 of the left main shaft and a work (a right work) W2 which is gripped by a chuck 18 of the right main shaft. In other words, the processes such as the hole forming process, the grooving process and the flat surface forming process can be applied to any of the right and left works, and the right and left works W1 and W2 can be simultaneously processed, by moving the upper and lower tool posts 13 and 14 in the direction of Z axis as occasion demands.

The tool post 13 steers the turret head 3 leftward at a time of processing the left work W1, and steers the turret head 3 rightward at a time of processing the right work W2. Since a direction of a cutting blade of a turning tool mounted to the turret head 3 is inverted in correspondence to a direction change in the direction of B axis, the turning process at a right work W2 is carried out by inverting the spinning direction of the right main shaft.

A maximum number of the tools which can be used for processing the left and right works W1 and W2 is limited by the number of the tool mounting portions of the upper and lower turret heads 3 and 16. In the case of processing a work
having a complicated shape and processing plural kinds of works without changing (attaching and detaching) the tool, a lot of tools are necessary. In order to make more tools mountable, it is necessary to increase the number of the turret heads, or increase the number of the tool mounting portions of the turret heads. In the latter case, it is necessary to make a diameter of the turret larger. However, if the turret is made larger in diameter, the tool post is enlarged in size. Particularly, the turret head which can turn in the direction of B axis requires a wider space for turning, and a machine becomes enlarged in size and becomes expensive.

DE 24 36 220 B1 describes an indexable tool turret assembly for a lathe comprising a base portion pivotally mountable about a first axis on a cross slide and a turret head indexably mounted on the base portion about a second axis inclined at an angle a to the first axis.

JP S54 17990 U describes a turret head of a lathe turning machine, the turret head comprising mounting portions for mounting tools which are inclined with respect to each other.

### SUMMARY OF THE INVENTION

### Problem to be Solved by the Invention

An object of the present invention is to obtain a combined lathe turning machine which can process a more complicated work without increasing the number of turret heads, and enlarging a diameter of the turret head, that is, without causing a complication and an enlargement in size of the machine, and can process various kinds to works without changing a tool.

### Means for Solving the Problem

In order to achieve the object mentioned above, the present invention provides a technical means for increasing a mounting number of tools of a turret head 3 which can turn in a direction of B axis.

The present invention solves the problem mentioned above by providing the lathe turning machine with the features of claim 1. The turret is generally provided with a plurality of inclined mounting portions 41 which mount a turning tool 2 in a diagonal radial direction in a turret head 3 having a plurality of tool mounting portions (hereinafter, refer to as "radial mounting portions") 31 which mount a tool, particularly a rotary tool 1 and a turning tool 2 to an outer periphery of the turret head 3 in a radial direction, that is, an orthogonal direction of an indexing rotation center line (an index axis) b of the turret head. Here, the diagonal radial direction means a direction of a bus line (a line of a conical surface passing through a peak) of a circular cone which has a peak on the index axis b of the inside of an end surface 33 of a turret case 32, that is, on the index axis b in an inner side of a turret case 32 of the turret head or on a center line of an index shaft supporting the turret case, and is expanded to the end surface (a surface in an opposed side to the index shaft) 33 of the turret case 32.

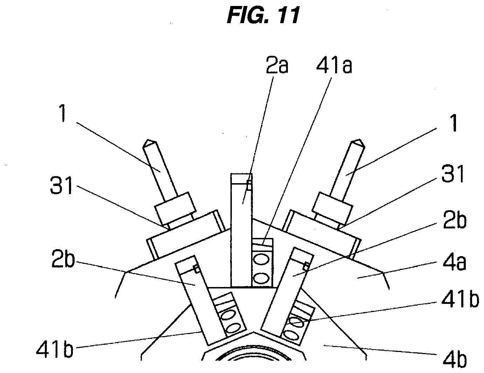

It is preferable that the radial mounting portion 31 and the inclined mounting portion 41 are provided in an offset manner so as to prevent their angular positions (phases) around the index axis b from being identical. This is because of avoidance of interference between a tool mounted to the other tool mounting portion (the inclined mounting portion or the radial mounting portion) and the work at a time of processing the work by the tool which is mounted to the radial mounting portion or the inclined mounting portion. However, in the inclined mounting portion having an apex angle of the circular cone, for example, equal to or less than 90 degrees, since a difference of angle around the B axis of the turret head 3 at a time of processing becomes larger, the difference of the angle between the state time of processing the work by the tool which is mounted to the radial mounting portion and the state of processing the work by the tool which is mounted to the inclined mounting portion becomes larger, the radial mounting portion 31 and the inclined mounting portion (41b in Fig. 11) can be provided while making the angular positions around the index axis b identical.

The turning tool 2 is mounted to the inclined mounting portion 41. The rotary tool 1 or the turning tool 2 is mounted to the radial mounting portion 31. The inclined mounting portion 41 is preferably arranged so that the angular position around the index axis b is set to an intermediate position of the adjacent radial mounting portions 31 and 31. In this case, the adjacent inclined mounting portions 41 and 41 can be arranged on the bus line of a circular cone. In the case of intending to make the number of the inclined mounting portions more, the inclined mounting portions 41 (41a and 41b) are arranged on the bus lines of the circular cones having different apex angles.

In the turret head 3 which is provided with a plurality of radial mounting portions 31 which mount the tool 1 in the radial direction which is orthogonal to the index axis b, and a plurality of inclined mounting portions 41 which mount the turning tool 2 diagonally to the index axis b, a plurality of tools can be mounted in each of the radial direction and the inclined direction.

The inclined mounting portion 41 can be easily provided by fixing the tool holders 4 (4a to 4d) having a tool fixing portion which fixes the turning tool 2 in the inclined direction to a peripheral portion in the opposite side to the index shaft of the turret case 32. In this case, the tool fixing portion of the tool holder comes to the inclined mounting portion 41.

The tool holder 4 is provided with a positioning means which defines the position of the tool holder at a time of fixing to the turret case 32. As the positioning means, a structure of positioning pair 43 and 43 is simple and practical, the positioning pair 43 and 43 individually coming into contact with two surfaces 34 and 34 pinching a ridge line 35 in an outer periphery of a polygon of the turret case 32 to be fixed. Of course, a structure using a positioning means such as a fitting or a knock pin can be used.

### Effect of the Invention

According to the present invention, it is possible to widely increase the number of the tools which can be mounted to the turret head, without enlarging a diameter of the turret head. Particularly, in the turret head which can mount the rotary tool, it is possible to avoid a matter that the necessary number of rotary tools can not be mounted by mounting the turning tools to the limited number of mounting portions for the rotary tools. Therefore, according to the present invention, there can be provided a combined lathe turning machine which can process a work having a more complicated shape without generating any enlargement in size of the machine and any wide increase of a machine cost, and a combined lathe turning machine which can continuously process more kinds of works without changing a tool.

### BRIEF EXPLANATION OF THE DRAWINGS

Fig. 1 is a side elevational view of a turret head according to a first embodiment and shows a tool mounting state;
Fig. 2 is a front elevational view of the turret head in Fig. 1;
Fig. 3 is a perspective view of a tool holder in the first embodiment and a turning tool fixed to the tool holder;
Fig. 4 is a front elevational view of the tool holder in the first embodiment;
Fig. 5 is a back elevational view of the tool holder in the first embodiment;
Fig. 6 is a cross sectional view showing a tool fixing structure of the tool holder;
Fig. 7 is a side elevational view of the turret head showing a processing state by a tool which is mounted to an inclined mounting portion;
Fig. 8 is a partial side elevational view of a second embodiment and shows a state in which phases of tools around an index axis are set to the same phase;
Fig. 9 is a partial front elevational view of the second embodiment;
Fig. 10 is a partial side elevational view of a third embodiment and shows a state in which phases of tools around an index axis are set to the same phase;
Fig. 11 is a partial front elevational view of the third embodiment; and
Fig. 12 is a schematic view showing an example of a combined lathe turning machine.

### DETAILED DESCRIPTION OF PREFERRED EMBODIMENT

### First Embodiment

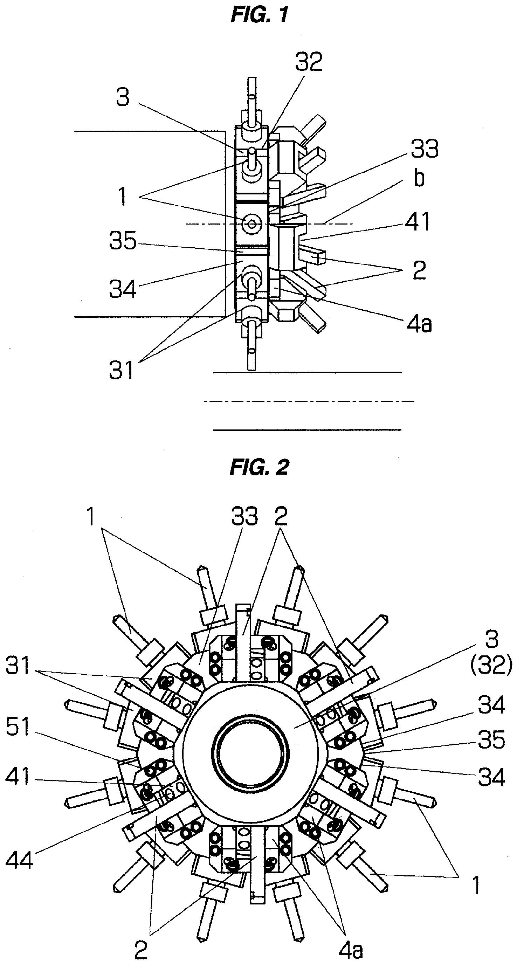

Figs. 1 to 7 are views showing a first embodiment according to the present invention. Fig. 1 is a side elevational view of a turret head and shows a state in which a rotary tool 1 and a turning tool 2 are mounted, and Fig. 2 is a front elevational view of the turret head in the same state in Fig.1. The turret head in the drawings is formed as a regular dodecagonal shape in a front view, and is structured such that the rotary tools 1 are mounted to radial mounting portions 31 at twelve positions, and the turning tools 2 are mounted to inclined mounting portions 41 at six positions. A tool drive shaft is embedded in the turret head 3 in a radial direction (a direction which is orthogonal to an index axis b), and the rotary tool 1 mounted to the radial mounting portion 31 provided in a regular dodecagonal outer peripheral surface of the turret head 3 is coupled to the tool drive shaft so as to be rotatably driven at a time of being indexed toward the work.

The turning tool 2 is mounted to the tool fixing groove (an inclined mounting portion) 41 of a tool holder 4a which is fixed to an outer peripheral portion of an end surface 33 of a turret case 32 by four bolts 51.

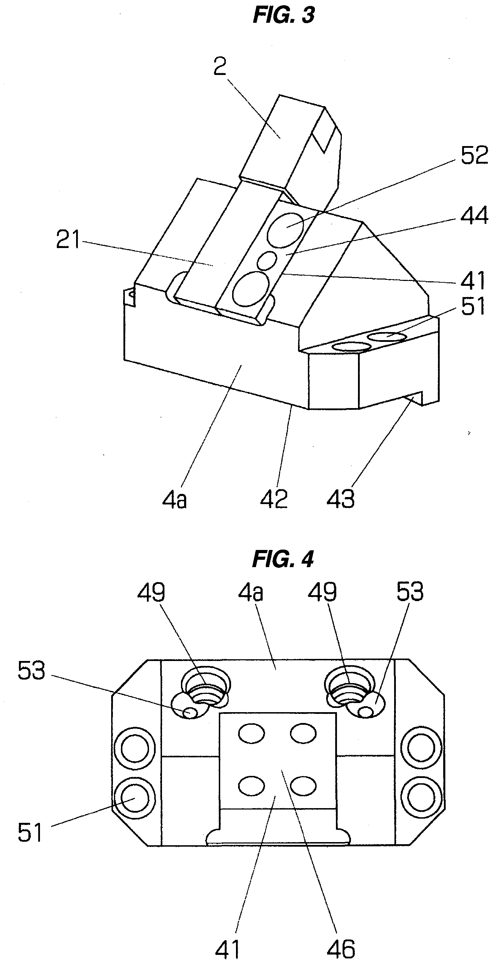

Figs. 3 to 6 are views showing the tool holder 4a. The tool holder 4a is provided with a bottom surface 42 which comes into surface contact with the end surface 33 of the turret case 32, and step surfaces 43 and 43 coming into surface contact with portions of the end surface 33 side of adjacent flat surfaces 34 and 34 in an outer periphery of the turret case are formed in an outer peripheral side of the bottom surface (an outer peripheral side of the turret head). The tool holder 4a can be positioned and fixed in a state in which a tool fixing groove (an inclined mounting portion) 41 provided in the center of the tool holder 4a is positioned in a ridge line portion in the outer periphery of the turret head, that is, a position just intermediate between the adjacent radial mounting portions 31, by fixing the bottom surface 42 to the end surface 33 of the turret case by the bolts 51 in a state in which the step surfaces 43 and 43 are brought into contact with the adjacent flat surfaces 34 and 34 in the outer periphery of the regular polygonal turret head.

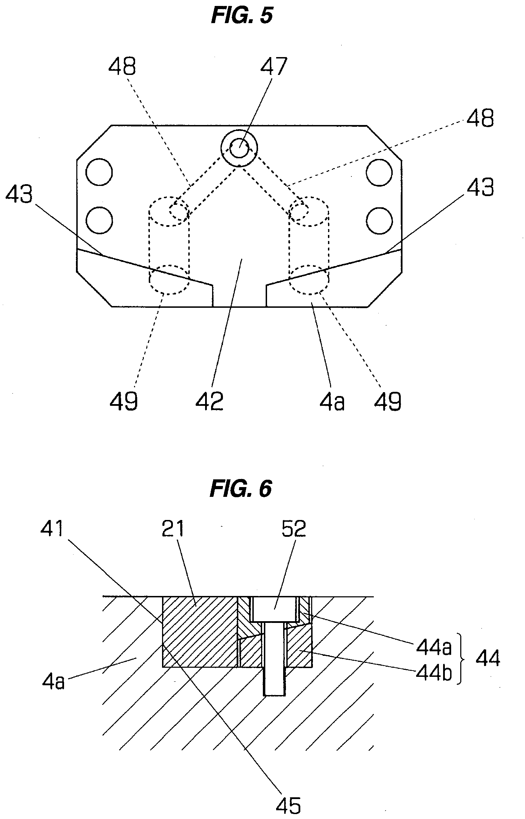

In the center of a front surface of the tool holder 4a, there is provided a tool fixing groove 41 to which a handle rod 21 of the turning tool 2 and a wedge bracket 44 for fixing the handle rod 21 are inserted. The turning tool 2 is inserted to one side of the tool fixing groove 41, and the handle rod 21 of the turning tool is pinched by a wall surface 45 of the tool fixing groove 41 and the wedge bracket 44 so as to be fixed by fastening the wedge bracket 44 constructed by two blocks 44a and 44b having inclined mating faces to the tool holder 4a by the bolt 52, as shown in Fig. 6. A bottom surface 46 of the tool fixing groove 41 is provided at an angle of 45 degrees in a side view in relation to the bottom surface 42 of the tool holder. Accordingly, the turning tool 2 fixed to the tool fixing groove 41 is mounted to the turret head 3 by setting an axial direction thereof to a direction of a bus line of a circular cone having an apex angle of 90 degree.

In the end surface 33 of the turret case, a cutting fluid supply hole (not shown in the drawing) is open to a portion to which each of the tool holders 4a is mounted. An inflow port 47 is provided at a position which is opposed to the cutting fluid supply hole in the bottom surface 42 of the tool holder 4a, and the inflow port is communicated with two nozzle receivers 49 provided in the tool holder 4a while passing through two through holes 48 within the tool holder 4a. A threaded hole 53 is provided in adjacent to each of the nozzle receivers 49. A spherical nozzle piece (not shown) which can set a direction of an injection port to a direction heading for a cutting edge of the turning tool 2 can be fixed to the nozzle receiver 49 by a pressing bracket which is fixed to the threaded hole 53 by a screw.

The cutting fluid supply hole open to the end surface 33 of the turret case passes through the turret head 3 in an axial direction thereof, and is structured such that when one certain turning tool 2 is indexed toward the work, the cutting fluid supply hole communicating with the inflow port 47 of the tool holder 4a retaining the turning tool is coupled to a cutting fluid supply coupler (a cutting fluid supplying joint provided between the tool post and the turret head) which is provided in a back face side (an index shaft side) of the turret case 32. As long as the turning tool 2 is fixed to the tool fixing groove 41 of the tool holder, and the direction of the nozzle of the nozzle piece is fixed toward the cutting edge of the turning tool, the cutting fluid is injected toward the cutting edge of the turning tool which is indexed toward the work.

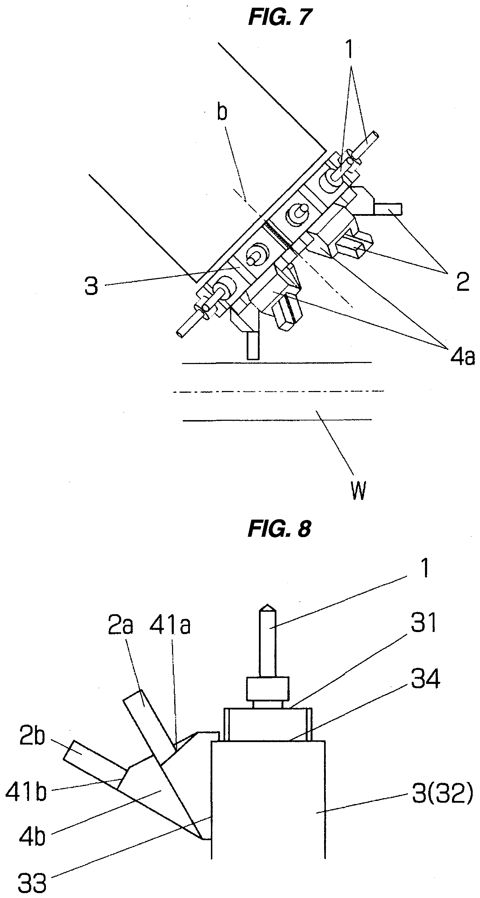

A state in which the work W is processed by the tool 1 mounted to the radial mounting portion 31 in the structure mentioned above is shown in Fig. 1. Further, a state in which the work W is processed by the tool 2 mounted to the inclined mounting portion 41 in the structure mentioned above is shown in Fig. 7.

When processing a hole which is orthogonal to the main shaft axis a and a flat surface which is parallel to the main shaft axis a, on the work W by the rotary tool 1 mounted to the radial mounting portion 31, and when processing the work W by the turning tool (not shown in the drawing) mounted to the radial mounting portion 31, the process is carried out while fixing the index axis b of the turret head 3 to a direction which is parallel to the main shaft axis a.

Further, when processing a hole which is parallel to the main shaft axis a and a flat surface which is orthogonal to the main shaft axis a, on the work W, the process is carried out by the rotary tool 1 while setting the index axis b to a direction of X axis which is orthogonal to the main shaft axis a. Further, when processing a hole and a flat surface which are inclined in relation to the main shaft axis a, the process is carried out while inclining the index axis b of the turret head at a corresponding angle. These processes are the same as the case that the processes are carried out by the tool mounted to the conventional turret head which can turn in the direction of B axis.

On the other hand, when processing by the turning tool 2 mounted to the inclined mounting portion 41, a turning process is carried out by setting the angle in the direction of B axis of the turret head 3 in such a manner that the axial direction of the turning tool 2 comes to the direction of X axis which is orthogonal to the main shaft axis a. In the example of the drawing, since the turning tool 2 is mounted in a direction which is 45 degrees inclined in relation to the index axis b of the turret head 3, the turret head 3 is fixed to a state in which the turret head 3 is inclined at 45 degrees in the direction of B axis, and the turning process of the work is carried out on the basis of the movement in the directions of Z and X of the tool post 13, and the rotation of the main shaft.

### Second Embodiment

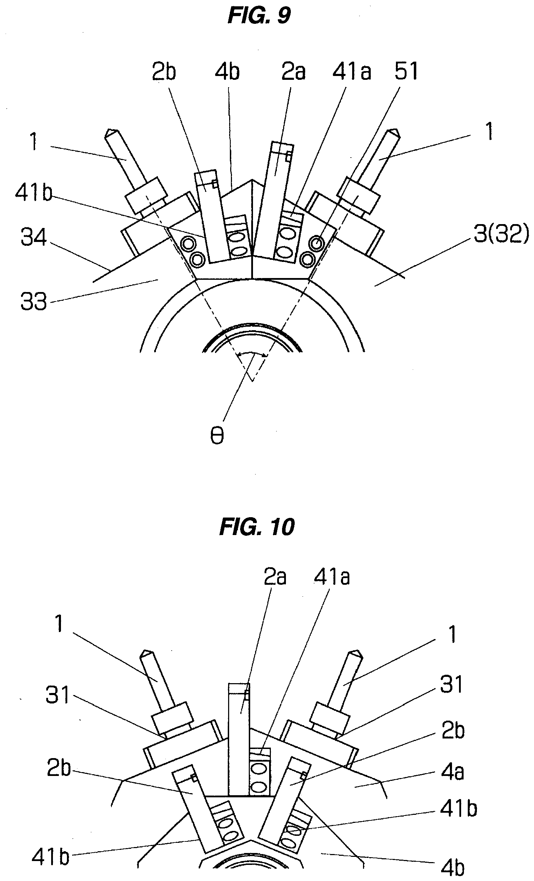

Figs. 8 and 9 are views showing a second embodiment and show a structure which is effective in the case that the mounting number of the turning tools is increased in the turret head having a small number of angles. In the same manner as the first embodiment, turning tools 2 (2a and 2b) are mounted via tool holders 4b which are positioned and fixed to a peripheral portion of an end surface of a turret case 32 according to the same structure as the first embodiment.

In the first embodiment, each of the tool holders 4a is provided with one tool fixing groove (inclined mounting portion) 41, however, each of the tool holders 4b according to the second embodiment is provided with two tool fixing grooves 41a and 41b. Two tool fixing grooves 41a and 41b are provided in directions which divide a pitch angle θ around the index axis b of the radial mounting portion 31 mounting the rotary tool into three equal parts. Further, a bottom surface of one tool fixing groove 41a is provided at 30 degrees (apex angle 120 degrees of a circular cone having a tool axial direction as a bus line) in relation to the bottom surface 42 of the tool holder, and the other tool fixing groove 41b is provided at 60 degrees (apex angle 60 degrees of the circular cone).

### Third Embodiment

Figs. 10 and 11 are views showing a third embodiment, are provided with a structure in which first and second ring-shaped tool holders 4c and 4d are fixed to a peripheral portion of an end surface of a turret case 32 coaxially with the turret head 3. Each of the tool holders 4c and 4d is individually provided with a plurality of tool fixing grooves 41a and 41b in an inclined radial direction. Each of the tool fixing grooves 41a of the first ring-shaped tool holder 4c is provided at an intermediate position between radial mounting portions 31 and 31 which are adjacent at angular positions around the index axis b, and while setting a groove bottom surface 46 to a direction of 30 degrees in relation to the bottom surface 42 of the tool holder. Each of the tool fixing grooves 41b of the second ring-shaped tool holder 4d is provided at the same position as the radial mounting portion 31 in the angular position around the index axis b, and while setting the groove bottom surface 46 to a direction of 60 degrees in relation to the bottom surface 42 of the tool holder.

When processing the work W by the turning tool 2a or 2b which is fixed to the inclined mounting portions 41a or 41b according to the second and third embodiments, the process is carried out by fixing the angle around the B axis of the turret head 3 to the corresponding angle to the angle of incline of each of the turning tools 2a or 2b. In other words, when the turning process is carried out by the turning tool 2a fixed to the tool fixing groove 41a in which the groove bottom surface 46 is inclined at 30 degrees in relation to the holder bottom surface 42, the process is carried out by inclining the axis b of the turret head 3 at 30 degrees in the direction of B axis in relation to the X axis. Further, when the turning process is carried out by the turning tool 2b fixed to the tool fixing groove 41b in which the groove bottom surface 46 is inclined at 60 degrees in relation to the holder bottom surface 42, the process is carried out by inclining the axis b of the turret head 3 at 60 degrees in the direction of B axis in relation to the X axis.

As mentioned above, it is possible to mount the more number of turning tools than the number of the rotary tools mounted to all the radial mounting portions to the turret head 3, by setting the number of the apex angle of the circular cone in the diagonal radial direction of the inclined mounting portion 41 to the plural number, and it is possible to achieve an improvement of a processed surface precision and an improvement of a processing efficiency, by carrying out the process while using a more appropriate turning tool.

## Claims

1. A lathe turning machine with a turret head and a tool post,
the turret head (3) being mounted to the tool post (13) so as to be capable of turning around an index axis (b), the index axis (b) being an indexing rotation center line of the turret head (3);
the turret head (3) comprising:
a plurality of radial mounting portions (31) for mounting tools (1) in a radial direction which is orthogonal to the index axis (b); and
a plurality of inclined mounting portions (41) for mounting turning tools (2, 2a, 2b) in a direction which is inclined to the index axis (b); wherein said inclined direction is not a radial direction;
**characterized in that**
the turret head (3) is mounted to the tool post (13) so as to be capable of turning around the Y axis of the lathe turning machine that is perpendicular to the index axis (b).

2. The lathe turning machine according to claim 1, wherein the radial mounting portions (31) and the inclined mounting portions (41) are arranged while shifting angular positions around said index axis (b).

3. The lathe turning machine according to claim 1, wherein said plurality of inclined mounting portions (41) are provided in a state in which an axial direction of a handle rod (21) thereof is set into directions of meridian lines of a plurality of circular cones, the cones having the index axis (b) as their center axis with the cone peak lying in an inward direction from said end surface (33) to the turret head (3) and the cones having different apex angles.

4. The lathe turning machine according to any of claims 1 to 3, said turret head (3) further comprising a turret case (32) and turning tool holders (4) fixed on the turret case (32), wherein each of the turning tool holders (4) comprises
a main body which is fixed to a peripheral portion of an end surface (33) of the turret case; and
one or plural tool fixing portions which fix a turning tool to the main body in an inclined direction,
wherein said inclined direction is a direction of a meridian line of a circular cone having the index axis (b) as its center axis with the cone peak lying in an inward direction from the end surface (33) to the turret head (3).

5. The lathe turning machine according to claim 4, wherein said main body is provided with a positioning pair (43) whose parts individually come into contact with two adjacent surfaces (34) in an outer periphery of a polygon of said turret case (32).

6. The lathe turning machine according to claim 4 or 5, wherein said tool fixing portion is provided in such a manner that a cutting edge of a turning tool fixed thereto is positioned at an intermediate portion of radial mounting portions (31) provided in an outer periphery of said turret head (3) at an angular position around the index axis (b).

## Patentansprüche

1. Drehbank mit einem Revolverkopf und einer Werkzeugsäule, wobei der Revolverkopf (3) so an der Werkzeugsäule (13) gelagert ist, dass er sich um eine Index-Achse (b) drehen kann, wobei die Index-Achse (b) eine indexierende Rotationsmittelachse des Revolverkopfes (3) ist;
wobei der Revolverkopf (3) Folgendes umfasst:
mehrere radiale Montageabschnitte (31) für die Montage von Werkzeugen (1) in einer radialen Richtung, die orthogonal zu der Index-Achse (b) verläuft; und
mehrere geneigte Montageabschnitte (41) für die Montage von Drehwerkzeugen (2, 2a, 2b) in einer Richtung, die zu der Index-Achse (b) geneigt ist, wobei die geneigte Richtung keine radiale Richtung ist;
**dadurch gekennzeichnet, dass**
der Revolverkopf (3) so an der Werkzeugsäule (13) gelagert ist, dass er sich um die Y-Achse der Drehbank drehen kann, die senkrecht zu der Index-Achse (b) verläuft.

2. Drehbank nach Anspruch 1, wobei die radialen Montageabschnitte (31) und die geneigten Montageabschnitte (41) angeordnet werden, während Winkelpositionen um die Index-Achse (b) verschoben werden.

3. Drehbank nach Anspruch 1, wobei die mehreren geneigten Montageabschnitte (41) in einem Zustand bereitgestellt werden, in dem eine axiale Richtung ihrer Handgriffstangen (21) in Richtungen von Meridianlinien von mehreren kreisförmigen Konusse eingestellt ist, wobei die Konusse die Index-Achse (b) als ihre Mittelachse haben, wobei die Konusspitze in einer einwärtigen Richtung von der Endfläche (33) zu dem Revolverkopf (3) liegt und die Konusse unterschiedliche Scheitelwinkel aufweisen.

4. Drehbank nach einem der Ansprüche 1 bis 3, wobei der Revolverkopf (3) des Weiteren ein Revolvergehäuse (32) und Drehwerkzeughalter (4), das an dem Revolvergehäuse (32) befestigt ist, umfasst, wobei jeder der Drehwerkzeughalter (4) Folgendes umfasst:
einen Hauptkörper, der an einem peripheren Abschnitt einer Endfläche (33) des Revolvergehäuses befestigt ist; und
einen oder mehrere Werkzeugbefestigungsabschnitte, die ein Drehwerkzeug an dem Hauptkörper in einer geneigten Richtung befestigen,
wobei die geneigte Richtung eine Richtung einer Meridianlinie eines kreisförmigen Konus ist, der die Index-Achse (b) als seine Mittelachse aufweist, wobei die Konusspitze in einer einwärtigen Richtung von der Endfläche (33) zu dem Revolverkopf (3) liegt.

5. Drehbank nach Anspruch 4, wobei der Hauptkörper mit einem Positionierungspaar (43) versehen ist, dessen Teile einzeln mit zwei benachbarten Flächen (34) in einem Außenumfang eines Polygons des Revolvergehäuses (32) in Kontakt kommen.

6. Drehbank nach Anspruch 4 oder 5, wobei der Werkzeugbefestigungsabschnitt in einer solchen Weise angeordnet ist, dass eine Schneidkante eines daran befestigten Drehwerkzeugs an einem Zwischenabschnitt radialer Montageabschnitte (31) positioniert ist, die in einem Außenumfang des Revolverkopfes (3) in einer Winkelposition um die Index-Achse (b) angeordnet sind.

## Revendications

1. Machine de tournage pourvue d'une tourelle revolver et d'un support d'outil,
la tourelle revolver (3) étant montée sur le support d'outil (13) de manière à pouvoir tourner autour d'un axe d'indexage (b), l'axe d'indexage (b) étant une ligne médiane de rotation d'indexage de la tourelle revolver (3) ;
la tourelle revolver (3) comprenant :
une pluralité de parties de montage radial (31) destinées au montage d'outils (1) dans une direction radiale qui est orthogonale à l'axe d'indexage (b) ; et
une pluralité de parties de montage incliné (41) destinées au montage d'outils de tournage (2, 2a, 2b) dans une direction qui est inclinée par rapport à l'axe d'indexage (b) ; dans laquelle ladite direction inclinée n'est pas une direction radiale ;
**caractérisée en ce que** :
la tourelle revolver (3) est montée sur le support d'outil (13) de manière à pouvoir tourner autour de l'axe Y de la machine de tournage, qui est perpendiculaire à l'axe d'indexage (b).

2. Machine de tournage selon la revendication 1, dans laquelle les parties de montage radial (31) et les parties de montage incliné (41) sont agencées par décalage de positions angulaires autour dudit axe d'indexage (b).

3. Machine de tournage selon la revendication 1, dans laquelle ladite pluralité de parties de montage incliné (41) est placée dans un état où une direction axiale de tige de poignée (21) de celles-ci est orientée dans des directions de lignes méridiennes d'une pluralité de cônes circulaires, les cônes ayant pour axe central l'axe d'indexage (b), le sommet des cônes se trouvant dans une direction intérieure, de ladite surface d'extrémité (33) à la tourelle revolver (3) et les cônes présentant des angles au sommet différents.

4. Machine de tournage selon l'une quelconque des revendications 1 à 3, ladite tourelle revolver (3) comprenant en outre un carter de tourelle (32) et des porte-outils de tournage (4) fixés sur le carter de tourelle (32), dans laquelle chacun des porte-outils de tournage (4) comprend :
un corps principal qui est fixé à une partie périphérique de surface d'extrémité (33) du carter de tourelle ; et
une ou plusieurs parties de fixation d'outil(s) qui fixe(nt) un outil de tournage au corps principal dans une direction inclinée,
dans laquelle ladite direction inclinée est une direction de ligne méridienne d'un cône circulaire ayant pour axe central l'axe d'indexage (b), le sommet du cône se trouvant dans une direction intérieure, de la surface d'extrémité (33) à la tourelle revolver (3).

5. Machine de tournage selon la revendication 4, dans laquelle ledit corps principal est pourvu d'une paire de positionnement (43) dont les parties entrent individuellement en contact avec deux surfaces adjacentes (34), à une périphérie extérieure d'un polygone dudit carter de tourelle (32).

6. Machine de tournage selon la revendication 4 ou 5, dans laquelle ladite partie de fixation d'outil est placée de manière qu'une arête de coupe d'un outil de tournage qui est y est fixé soit positionnée à une partie intermédiaire de parties de montage radial (31) placées à une périphérie extérieure de ladite tourelle revolver (3), à une position angulaire autour de l'axe d'indexage (b).
